# EUROPÄISCHE PATENTSCHRIFT

(11) **EP 1 180 484 B1**
(45) Veröffentlichungstag und Bekanntmachung des Hinweises auf die Patenterteilung: **02.11.2005**
(21) Anmeldenummer: 01119483.4
(22) Anmeldetag: 14.08.2001
(51) Int. Cl.: B65G 47/22, B65G 47/26

(54) **Feinausrichtstation und Verfahren zum Betrieb derselben**
Fine alignment station and method for its operation
Station d'alignement fin et sa méthode d'opération

(30) Priorität: 16.08.2000 DE 10039897
(43) Veröffentlichungstag der Anmeldung: 20.02.2002
(73) Patentinhaber: Multi-Tech. Deurne B.V., 5753 PM Deurne (NL)
(72) Erfinder: Bialy, Jürgen, 48341 Altenberge (DE)
(74) Vertreter: Habbel, Hans-Georg

(56) Entgegenhaltungen:
- EP-A- 0 486 043
- GB-A- 1 156 756
- GB-A- 1 507 365
- US-A- 5 191 962

## Beschreibung

Die Erfindung betrifft eine Feinausrichtstation für zu verpackende Güter, z. B. Lebensmittel und ein Verfahren zum Betrieb derselben.

Bei der insbesondere industriellen Herstellung von z. B. Lebensmitteln erfolgt in der Regel auch eine Verpackung derselben. Zum Teil liegen die hergestellten und insbesondere geschnittenen Lebensmittel in einer Lage vor, in der diese nicht verpackt werden können bzw. eine Verpackung ungünstig erscheint. Daher ist es in diesem Fall notwendig, die Güter vor dem Verpacken in eine Lage zu bringen, in der sie in gewünschter Form verpackt werden können.

Im nachfolgenden wird als Ausführungsbeispiel auf das Verpacken von Käsescheiben eingegangen. Es ist jedoch so zu verstehen, daß die nachfolgend beschriebene Erfindung nicht auf das Verpacken von Käsescheiben eingeschränkt ist, sondern sämtliche zu verpackenden entsprechenden Güter, z. B. Lebensmittel umfaßt.

Käselaibe werden industriell häufig so geschnitten, daß die Käselaibe mit ihrer breiten Längsseite aufliegen, um so den Schneideweg des Messers durch den Käse möglichst kurz zu halten und um hierdurch pro Zeiteinheit mehr Käsescheiben schneiden zu können. Die geschnittenen Käsescheiben liegen nach dem Schneidvorgang versetzt aufeinander und bilden eine sogenannte Schindel. Diese Schindel aus mehreren versetzt zueinander liegenden Käsescheiben wird der Verpackungsstation zugeführt und muß derart gedreht werden, daß die schmale Stirnseite der Schindel in die Verpackungsstation eingeführt und in dieser Form verpackt wird.

Aus dem Stand der Technik ist es bereits bekannt, eine Drehstation für entsprechende Käseschindeln (und für andere Lebensmittel) vorzusehen, in der die Käseschindel um 90° vor der Verpackungsstation gedreht wird. Das Drehen erfolgt über ein zweigeteiltes Transportband, wobei die rechte Seite des Transportbandes über einen eigenen Antrieb verfügt, und auch die linke Seite des Transportbandes verfügt über einen eigenen Antrieb. Durch die möglichen unterschiedlichen Geschwindigkeiten der rechten und der linken Transportbandhälfte kann dann die Schindel auf dem Transport zur Verpackungsstation gedreht werden.

Ein Nachteil dieser bekannten Vorrichtung ist, daß das Verhalten der Käseschindel auf dem Transportband von vielerlei Faktoren abhängig ist. Zum Beispiel ist das Dreh- bzw. das Schlupfverhalten der Käseschindel abhängig von der Temperatur, vom jeweiligen Fettgehalt des Käses und auch von der Betriebszeit der Ausrichtstation. Der Schlupf der Käseschindel auf dem Transportband bei der Drehung der Käseschindel wird bei zunehmender Temperatur und bei zunehmendem Fettgehalt erhöht. Auch wenn die Transportstation längere Zeit in Betrieb ist und sich auf dem Transportband bereits Reste des zu transportierenden Lebensmittels abgesetzt haben, wird hierdurch erfahrungsgemäß der Schlupf des zu drehenden Lebensmittels erhöht.

Es ist einsichtig, daß es aufgrund dieser unterschiedlichen Faktoren dazu kommen kann, daß Käseschindeln entweder zu weit gedreht werden oder aber nicht weit genug gedreht werden, und aus diesem Grunde in nicht korrekter Position an der Verpackungsstation ankommen und hier zu Ausfallzeiten der Verpackungsstation führen können.

In der gattungsbildenden DE 40 24 516 A1 wird ein Verfahren vorgeschlagen, das über punktuell wirkende Fotozellen die Lage von Transportgut versucht zu erkennen und entsprechend dieser Information eine Regelung der Antriebe von Förderbändern durchführt. Es wird hier betont, dass lediglich versucht wird, durch diese Fotozellen annäherungsweise die Lage des Transportgutes zu erfassen, denn insbesondere bei unregelmäßig geformtem Transportgut, wie z. B. Transportgut natürlicher Produktion, wie Schinkenscheiben od. dgl., haben die Schinkenscheiben stark unterschiedliche Umrissformen und daher nützt es für eine korrekte Ausrichtung dieser Schinkenscheiben nichts, wenn lediglich ein Punkt oder zwei Punkte des Umrisses der Schinkenscheibe abgegriffen werden, um hieraus eine Lagekorrektur durchzuführen. Es wird daher vorgeschlagen, mehrere Ausrichtförderer mitsamt deren Fotozellen hintereinander zu schalten, um durch diese Verdoppelung von Fotozellen eine etwas höhere Genauigkeit zu erreichen. Wenn jedoch bereits durch ein Fotozellenpaar eine vernünftige Ausrichtung nicht möglich ist, so ist auch durch das darauf folgende Fotozellenpaar des angehängten weiteren Ausgleichförderers ebenfalls eine korrekte Ausrichtung nicht sicher zu erreichen, zumindest nicht bei unregelmäßig geformtem Transportgut.

Der Erfindung liegt die Aufgabe zugrunde, ein Verfahren mit geringem Aufwand für die Feinausrichtung vorzuschlagen, das auch für schwer zu verpackende Gegenstände funktioniert.

Diese der Erfindung zugrundeliegende Aufgabe wird durch die Lehre des kennzeichnenden Teiles des Hauptanspruches gelöst.

Mit anderen Worten ausgedrückt wird eine Feinausrichtstation vorgeschlagen, bei der die Lage des Gutes über mindestens einen optischen Sensor erfaßt wird und dieser Sensor ist mit einem Prozeßrechner verbunden, der wiederum mit einer Vorrichtung verbunden ist, die das Lebensmittel drehen kann, so daß also die Lage des Lebensmittels optisch erfaßt wird und bei Bedarf über eine Vorrichtung veränderbar ist.

Vorteilhafte Ausgestaltungen der Erfindung sind in den Unteransprüchen erläutert.

In vorteilhafter Ausgestaltung wird zumindest ein Teilbereich des Gutes flächig von dem optischen Sensor erfaßt, um eine exakte Auswertung des Istzustandes des Gutes zu erhalten, auch dann, wenn das Gut ungleichmäßige Ränder haben sollte, wie z. B. mit Löchern versehener Käse, unregelmäßig ausgebildete Wurstscheiben u. dgl.

Eine einfache und wirkungsvolle kombinierte Transport- und Drehvorrichtung wird dann erreicht, wenn als Träger für das Gut ein Transportband verwendet wird, das aus zwei nebeneinander angeordneten unterschiedlich antreibbaren Transportbändern besteht.

Eine Lampe beleuchtet in vorteilhafter Ausgestaltung den Erfassungsbereich des Sensors.

Ein Ausführungsbeispiel der Erfindung ist in den Zeichnungen dargestellt, wobei
- Fig. 1: die Gerätekombination einer Ausrichtstation bzw. Drehstation und einer Feinausrichtstation in einer Seitenansicht darstellt,
- Fig. 2: zeigt in einer Seitenansicht die um 90° gedrehte Vorrichtung aus Fig. 1 dar und
- Fig. 3: stellt in einer Aufsicht in einer Ausschnittsdar- stellung das Transportband der Ausrichtstation, z. B. Drehstation und der Feinausrichtstation mit- samt gehaltener Lebensmittel dar.

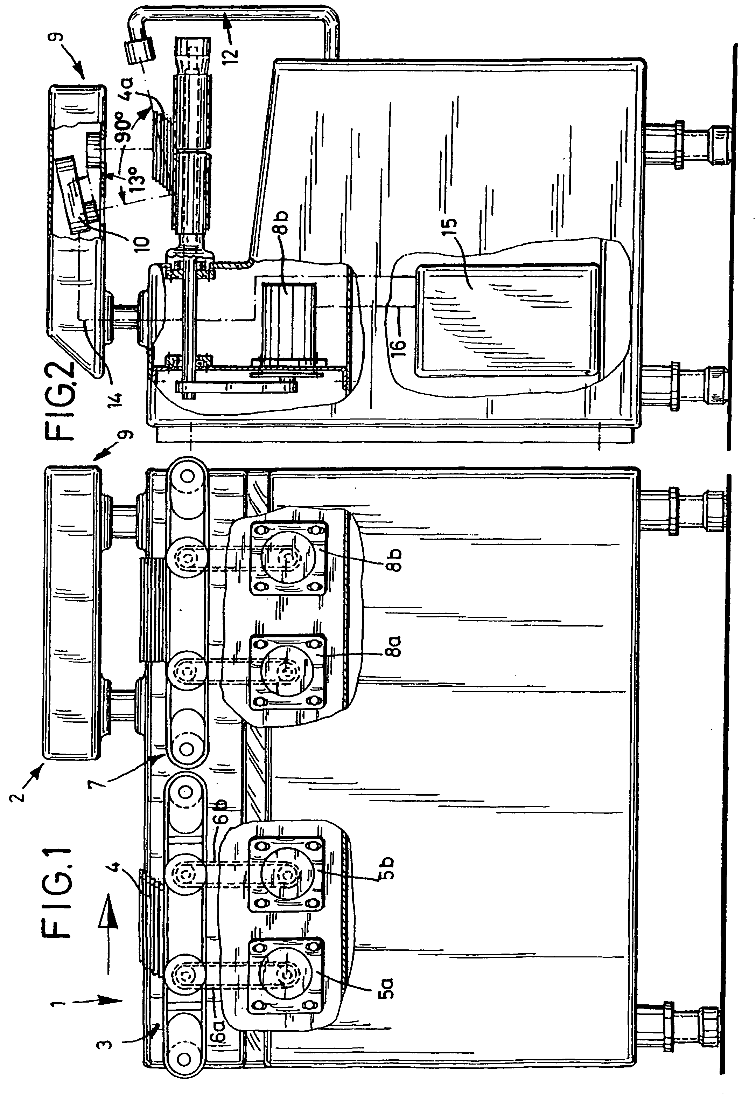

Bezugnehmend auf Fig. 1 ist die Gerätekombination einer Drehstation 1 und einer daran angeordneten Feinausrichtstation 2 dargestellt. Die Feinausrichtstation 2 kann auch als einzelnes Gerät oder in anderen Gerätekombinationen verwendet werden.

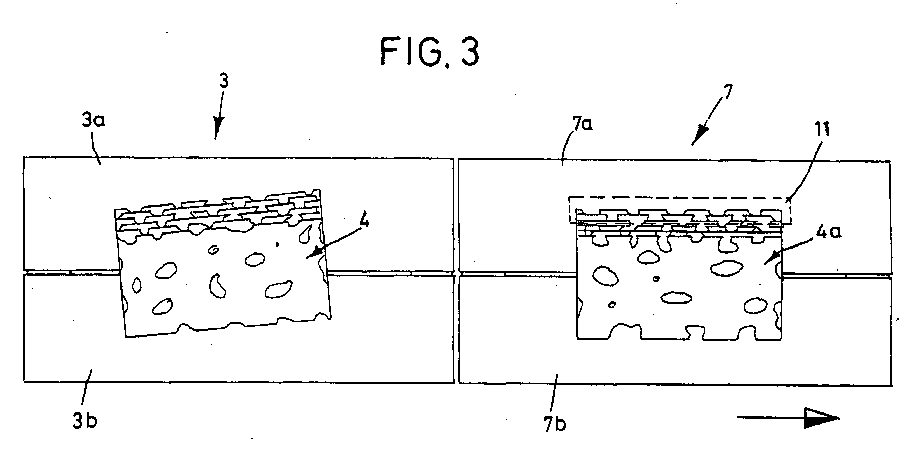

Die Drehstation 1 weist ein Transportband 3 auf, das - wie aus Fig. 3 ersichtlich wird - aus zwei nebeneinander angeordneten Transportbandhälften 3a und 3b besteht.

Auf diesen Transportbandhälften 3a und 3b wird z. B. eine Käseschindel 4 oder ein sonstiger Gegenstand in Transportrichtung bewegt. Jede der Transportbandhälften 3a und 3b verfügt über einen eigenen Antrieb 5a und 5b, die über Antriebselemente 6a und 6b die jeweiligen Transportbandhälften 3a und 3b antreiben, wie z. B. über Treibriemen.

Mit anderen Worten ausgedrückt kann über den Antrieb 5a die Transportbandhälfte 3a langsamer angetrieben werden als die Transportbandhälfte 3b über den Antrieb 5b und umgekehrt, und durch diesen unterschiedlichen Antrieb beider Transportbandhälften 3a, 3b erfolgt eine Vorabdrehung der Käseschindel 4 nach der Schneidstation um ca. 90°.

Die Länge der Transportbandhälften 3a und 3b ist so bemessen, daß während des Transports der Käseschindel durch das Transportband 3 eine Drehung der Schindel um 90° erfolgt. Dieses Ziel wird jedoch nicht immer völlig exakt erreicht, da durch sich ändernde Einflußgrößen das Schlupfverhalten der Schindel auf dem Transportband 3 sich ändert, und dies kann dazu führen, daß die Käseschindel z. B. nur um 87° gedreht wird oder aber auch um mehr als 90°.

Um hier eine Feinausrichtung der Käseschindel vor der Verpackungsstation zu ermöglichen, wird die Käseschindel einer Feinausrichtstation 2 zugeführt, wobei die Käseschindel 4 von dem Transportband 3 auf ein Transportband 7 der Feinausrichtstation 2 übergeben wird. Auch dieses Transportband 7 besteht analog zu dem Transportband 3 aus zwei unabhängig voneinander antreibbaren Transportbandhälften 7a und 7b, die wiederum über entsprechende separate Antriebe 8a und 8b antreibbar sind.

Oberhalb des Transportbandes 7a ist in einer dachförmigen Konstruktion 9 ein Bildverarbeitungssystem 10 angeordnet, das in einem Winkel von z. B. 13° einen Teilbereich der transportierten Schindel 4a erfaßt. Dieser von dem Bildverarbeitungssystem 10 erfaßte Teilbereich ist in Fig. 3 als Bereich 11 gekennzeichnet. Es handelt sich hierbei um den Bereich der Längskante und dieser Teilbereich wird jedoch flächig erfaßt, um auch bei stark zerklüfteten Rändern ein genaues Abbild der genauen Lage der Schindel zu ermöglichen. Dies ist ein wesentlicher Vorteil gegenüber der punktuellen Verwendung eines Sensors, der bei seiner Erfassung z. B. gerade ein Käseloch erfassen könnte und in diesem Fall würde es zu einer falschen Beurteilung der Lage der Käseschindel kommen. Eine Lampe 12 beleuchtet die von dem Bildverarbeitungssystem 10 erfaßte Käseschindel.

Das Bildverarbeitungssystem ist über eine Leitung 14 mit einem Rechner 15 verbunden, der die Istlage der Käseschindel 4a mit der Solllage dieser Schindel vergleicht und entsprechende Steuer- oder Regelbefehle über eine Leitung 16 an die Antriebe 8a und 8b der Transportbandhälften 7a, 7b abgibt, um durch eine entsprechende Ansteuerung dieser Antriebe, und daraus resultierend der Transportbandhälften 7a und 7b, eine Drehung der Käseschindel 4a veranlaßt.

Diese Erfassung der momentanen Lage der Käseschindel erfolgt in vorteilhafter Ausgestaltung nicht einmalig, sondern zwei- oder besser noch vielfach hintereinander, um möglichst oft den Istzustand der Käseschindel erfassen zu können und falls nötig eine Korrektur der Lage der Käseschindel zu erreichen auf dem zuvor beschriebenen Weg. Bei der vorgestellten Vorrichtung erfolgt im Abstand von 2,5 Millisekunden eine Aufnahme der Käseschindel und somit eine Erstellung des Istzustandes der transportieren Käseschindel.

Sobald über das Bildverarbeitungssystem festgestellt wird, daß sich die Käseschindel 4a in der korrekt gewünschten Lage auf dem Transportband 7 befindet, wird das Erfassungssystem abgeschaltet und die Käseschindel 4a bzw. das ansonsten transportable Lebensmittel oder zu verpackende Gut wird der Verpackungsstation zugeführt.

## Patentansprüche

1. Verfahren zum Betrieb einer Feinausrichtstation für zu verpackende Güter mit mindestens zwei nebeneinander angeordneten Transportbändern, die durch unterschiedliche Transportgeschwindigkeiten eine Drehung des darauf transportierten Gutes ermöglichen sowie eines optischen Sensors zur Erfassung der Lage des zu verpackenden Gutes und einer Regelung der Geschwindigkeit der Antriebe der Transportbänder bei einer Fehllage des zu verpackenden Gutes, **gekennzeichnet durch** ein Bildverarbeitungssystem als optischen Sensor, das das zu verpackende Gut flächig erfasst, wobei das Bildverarbeitungssystem wiederholt die Lage des zu verpackenden Gutes erfasst und diese Daten im Bedarfsfall zur wiederholten Regelung des Antriebes der Transportbänder verwendet.

2. Verfahren gemäß Anspruch 1, **gekennzeichnet durch** die flächige Erfassung lediglich eines Randbereiches des zu fördernden Gutes **durch** das Bildverarbeitungssystem.

3. Verfahren gemäß einem der vorhergehenden Ansprüche durch die Verwendung von zwei nebeneinander angeordneten, unterschiedlich antreibbaren Transportbändern (3, 7).

## Claims

1. Method for operating a fine alignment station for articles to be packaged, comprising at least two conveyor belts arranged side-by-side which enable rotation of the article transported thereon by different transport velocities, an optical sensor for detecting the position of the article to be packaged and means for controlling the speed of the drives of the conveyor belts in case of incorrect positioning of the article to be packaged, **characterised by** an image processing system as the optical sensor which detects the article to be packaged, the image processing system repeatedly detecting the position of the article to be packaged and utilising this data if required for repeated control of the drive of the conveyor belts.

2. Method according to claim 1, **characterised by** the planar detection by the image processing system of only an edge portion of the article to be conveyed.

3. Method according to either of the preceding claims, **characterised by** the use of two differently driveable conveyor belts (3, 7) arranged side-by-side.

## Revendications

1. Procédé pour faire fonctionner un poste d'alignement précis de produits à emballer, comportant au moins deux bandes de transport juxtaposées qui, sous l'effet de différentes vitesses de transport, permettent de faire tourner les produits transportés sur celles-ci, ainsi qu'un capteur optique, destiné à détecter la position du produit à emballer, et une régulation de la vitesse des systèmes d'entraînement des bandes de transport lorsque le produit à emballer est mal positionné, **caractérisé par** un système de traitement de l'image sous forme de capteur optique, qui détecte le produit à emballer en deux dimensions, le système de traitement de l'image détectant de manière répétitive la position du produit à emballer et utilisant, en cas de besoin, ces données pour une régulation répétitive du système d'entraînement des bandes de transport.

2. Procédé selon la revendication 1, **caractérisé par** la détection bidimensionnelle uniquement d'une zone de bordure du produit à transporter par le système de traitement de l'image.

3. Procédé selon l'une des revendications précédentes, **caractérisé par** l'utilisation de deux bandes de transport (3, 7) juxtaposées et aptes à être entraînées de manière différente.
